# EUROPEAN PATENT SPECIFICATION

(11) **EP 2 398 607 B1**
(45) Date of publication and mention of the grant of the patent: **05.06.2019**
(21) Application number: 10705422.3
(22) Date of filing: 09.02.2010
(51) Int. Cl.: B21F 27/10, B21F 27/12, B21F 27/20, B23K 11/00

(54) **METHOD AND APPARATUS FOR MAKING REINFORCEMENTS FOR REINFORCED CONCRETE**
VERFAHREN UND VORRICHTUNG ZUR HERSTELLUNG VON ARMIERUNGEN FÜR ARMIERTEN BETON
MÉTHODE ET APPAREIL DE FABRICATION D'ARMATURES POUR BÉTON ARMÉ.

(30) Priority: 20.02.2009 IT BO20090100
(43) Date of publication of application: 28.12.2011
(73) Proprietor: Schnell S.p.A., 61036 Colli al Metauro PU (IT)
(72) Inventor: RUPOLI, Simone, I-61030 Montemaggiore al Metauro (PU) (IT)
(74) Representative: Manzella & Associati
(86) International application number: PCT/IB2010/050578
(87) International publication number: WO 2010/095076

(56) References cited:
- EP-A1- 0 030 934
- EP-A1- 0 162 183
- EP-A1- 0 479 128
- EP-A2- 1 145 783
- WO-A1-93/19868
- WO-A2-2010/052562
- AU-B2- 523 559
- GB-A- 2 132 541

## Description

### Technical Field

The present invention relates to a method and an apparatus for making tridimensional and/or flat reinforcements for reinforced concrete, as in particular assembled metal cages, welded wire nettings and the like.

### Background Art

At the present time various techniques that allow to make bidimensional or tridimensional metal structures suitable to be used as reinforcements for reinforced concrete are known.

European patent EP 1539397 describes a method for making wire nettings constituted by longitudinal irons joined by means of transverse irons. The union of the transverse irons to the longitudinal irons is made through U-shaped open stirrups suitable to enclose the same transverse irons.

European patent EP 0162183, forming the basis for the preamble of the independent claims 1 and 2, in its turn describes a method and a machine for making tridimensional metal structures obtained from level nets and electro-welded transverse irons. The level nets are positioned by means of a suitable series of supports on suitably distanced parallel planes and are then joined to the transverse irons through a series of successive welding steps.

The known apparatuses generally turn out to be scarcely versatile, as they allow to make specific typologies of reinforcements for reinforced concrete.

Vice versa in the specific fields the exigency is felt of being able to alternately make metal reinforcements for reinforced concrete of different type, whether with bidimensional or tridimensional structures.

### Disclosure of Invention

The task of the present invention is that of solving the aforementioned problems, devising a method that allow to easily make reinforcements for reinforced concrete of different types, either with bidimensional or tridimensional structure.

A further scope of the present invention is that of providing an apparatus for making reinforcements for reinforced concrete operating according to the above mentioned method.

Another object of the present invention is that of providing an apparatus for making reinforcements for reinforced concrete having a simple conception, a securely reliable functioning and versatile use, as well as relatively economic cost.

The above mentioned scopes are attained, according to the present invention, by the method and apparatus for making reinforcements for reinforced concrete according to claims 1 and 2.

### Brief Description of the Drawings

Details of the invention shall be more apparent from the detailed description of a preferred embodiment of the apparatus for making reinforcements for reinforced concrete according to the invention, illustrated for indicative purposes in the attached drawings, wherein:
figure 1 shows a perspective view of the apparatus for making reinforcements for reinforced concrete according to the invention;

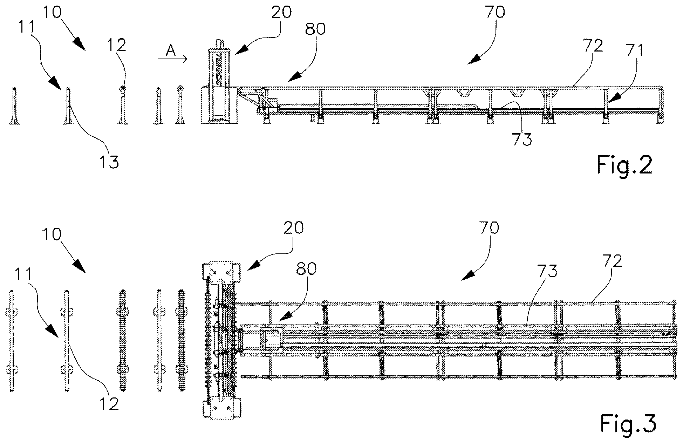

figures 2 and 3 respectively show a lateral view and a plan view of such an apparatus;
figure 4 shows a perspective view of support means for the longitudinal bars in a loading station of the apparatus;
figure 5 shows a perspective view of a station for joining the longitudinal and transverse reinforcement elements in the apparatus in hand;
figure 6 shows a perspective view from a different angle of such a joining station, partially broken;
figure 7 shows a cross section view according to a longitudinal vertical plane of the same joining station;
figure 8 shows a front view thereof, partially broken;
figure 9 shows a front view of an increased portion of the joining station in a different operating condition;
figure 10 shows a perspective view thereof;
figure 11 shows a perspective view of leveller means associated with said joining station;
figures 12, 13 and 14 respectively show a detail view of said leveller means in cross section according to a longitudinal vertical plane, in various use configurations;
figure 15 shows a perspective view of haulage means in an outlet station for the realized structure;
figures 16 - 19 show a perspective view of an operating zone of the joining station in successive steps of the work cycle;
figures 20 and 21 show a front view of a different embodiment of means for joining said transverse and longitudinal elements, in various operating steps;
figures 22 - 32 show various structures that can be made by means of the claimed apparatus.

### Best Modes of Carrying Out the Invention

With particular reference to such figures, the apparatus for making reinforcements for reinforced concrete according to the present invention is indicated in its entirety with 1. The reinforcements to be made are generically constituted, in a known way, by a series of longitudinal elements 2 joined by transverse elements 3 in a way as to make bidimensional or tridimensional net metal structures. Such longitudinal and transverse elements 2, 3 can be constituted indifferently by bars which are straight or folded or calendered at least once at least at one end, or otherwise profiled according to a closed profile with one or more overlappings. More in particular, it is possible to provide for the longitudinal bars 2 and/or the transverse elements 3 to be equipped at one end or both ends with at least one fold 2a of suitable length, folded with respect to the longitudinal axis of the same bars 2 by a predetermined folding angle, for example squared as represented. Furthermore in the illustrated case the transverse elements 3 are constituted by polygonal-profiled stirrups but it is obviously possible to provide for the use of transverse irons shaped in any way, included straight irons.

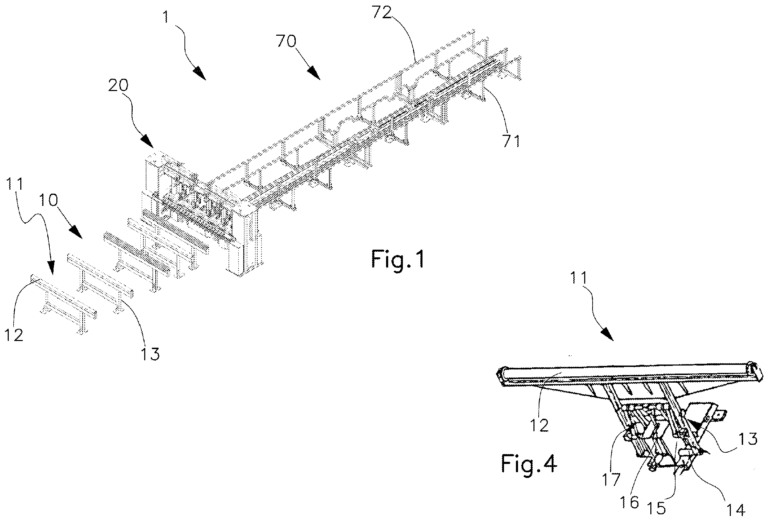

With reference to figure 1, the apparatus 1 comprises a loading station 10 in correspondence of which are provided support means 11 for the longitudinal bars 2 arranged in series. With reference to figure 4, such support means 11 are preferably constituted by a series of rollers 12 arranged coplanar with parallel horizontal axis. The rollers 12 are mounted freely rotatable on respective bearing frames 13. The longitudinal bars 2 are prearranged, suitably distanced one another, on a substantially horizontal work plane defined by cited support means 11. The rollers 12 of the support means 11 allow the support and the shift of the longitudinal bars 2 according to a feed direction A axial to the same longitudinal bars 2 and reduce the effort of the same movement.

Alternately it is possible to provide for support means 11 that may be pulled down in order to allow the passage of the folds 2a of the longitudinal bars 2. Within such a scope for example the bearing frames 13 for the rollers 12 can be tilting on a longitudinal plane through articulation on a lower axis 14, hinged to a fixed base, as illustrated in fig. 4. The tilting of the bearing frames 13 for the rollers is controlled by suitable actuator members 16 through a leverage 17.

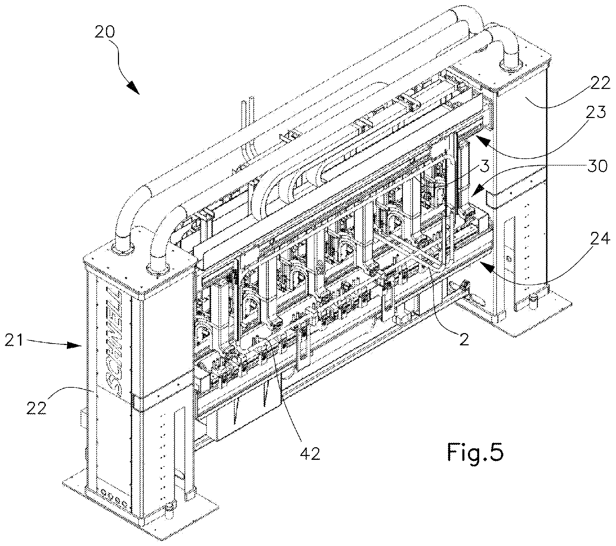

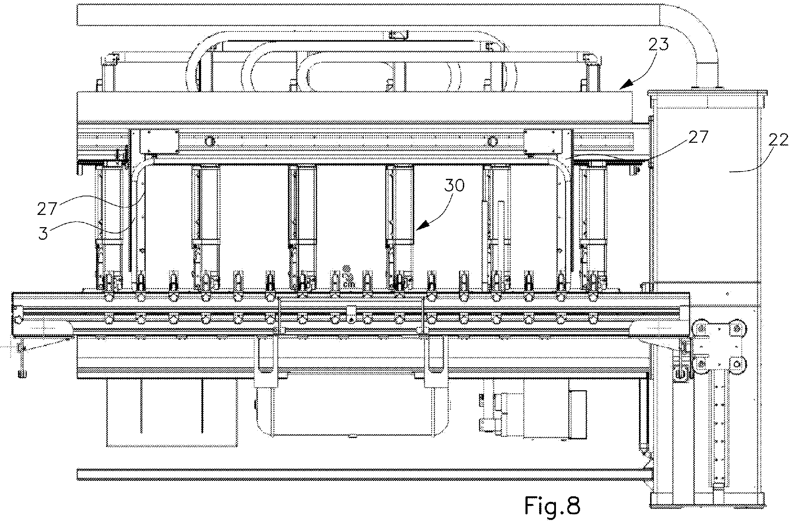

With reference to figure 5, downstream of the loading station 10 is arranged a joining station 20 in which is performed the joining of the longitudinal bars 2 to at least a transverse element 3, through welding. The joining station 20 provides for a framework 21 substantially portal-shaped, defined by a couple of lateral columns 22 between which are arranged an upper crossbar 23 and a lower crossbar 24. With reference to figure 8, the upper crossbar 23 frontally carries a guide 26, which basically extends for the total length of the same crossbar 23, on which are mounted a couple of supports 27 of the transverse element 3. The supports 27 have a position which is adjustable according to the dimensions of the transverse element 3. In the illustrated case, the supports 27 are constituted by outlined elements suitable to contain a single stirrup 3, open or closed, on a plane preferably vertical and orthogonal to the feed direction A of the longitudinal bars 2.

As a rule, the stirrups 3 are loaded manually on the apparatus. Nevertheless it is possible to provide for the use of automatic loading devices, known per se, to simultaneously load the transverse elements 3. Particularly such automatic devices can operate the multiple loading of transverse elements having different diameter and/or length, in order to make particular types of metal reinforcements.

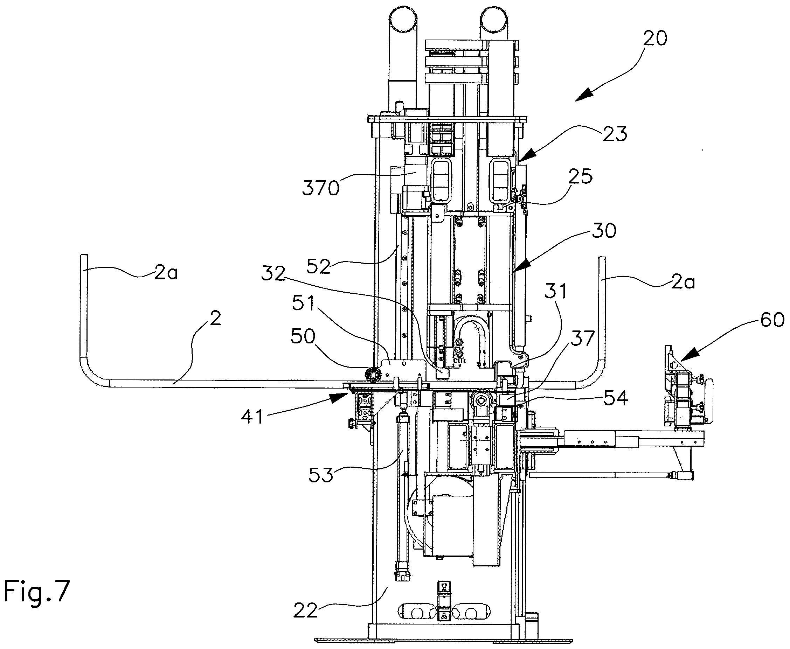

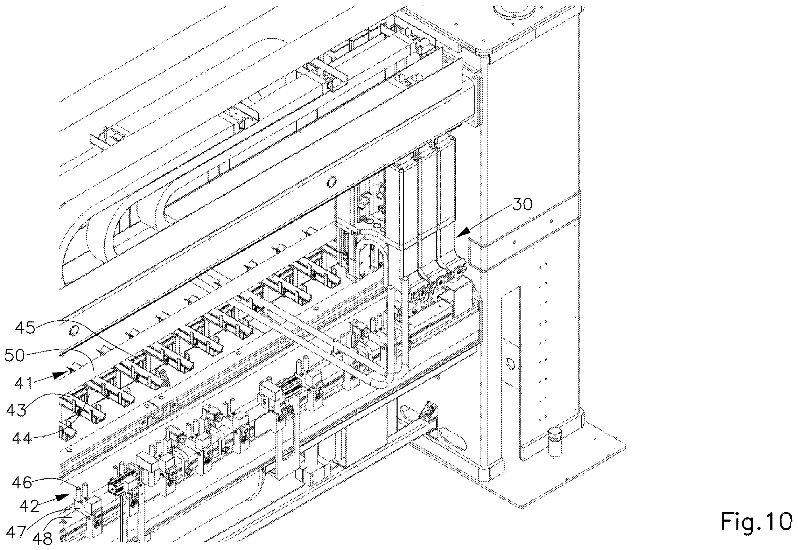

Underneath the upper crossbar 23 are arranged guide means 25 along which a plurality of welding heads 30 are slidingly supported. With reference to figure 7, the welding heads 30 are suitable to be shifted along the guide means 25, independently one another, upon activation of suitable movers 370. In particular, the welding heads 30 can be shifted and pack collected on the outer parts of the upper crossbar 23 to allow the passage, in extraction step, of the metal structure in formation, as better described in the following (see fig. 10).

The welding heads 30 are for example provided in a number equal to the longitudinal bars 2 to be welded. In effect it is yet possible to provide for the use of a number of welding heads smaller than the number of the longitudinal bars 2, providing for at least one thereof to be mobile along the upper crossbar 23 of the portal framework 21. It is also to be provided that a same welding head 30 can operate on more bars at the same time, in particular in the case in which these latter have a reduced diameter. The welding heads 30 provide for respective welder members constituted by a couple of electrodes 31, 37 made of adapted conductor material, suitably connected to a device for supplying the electric energy.

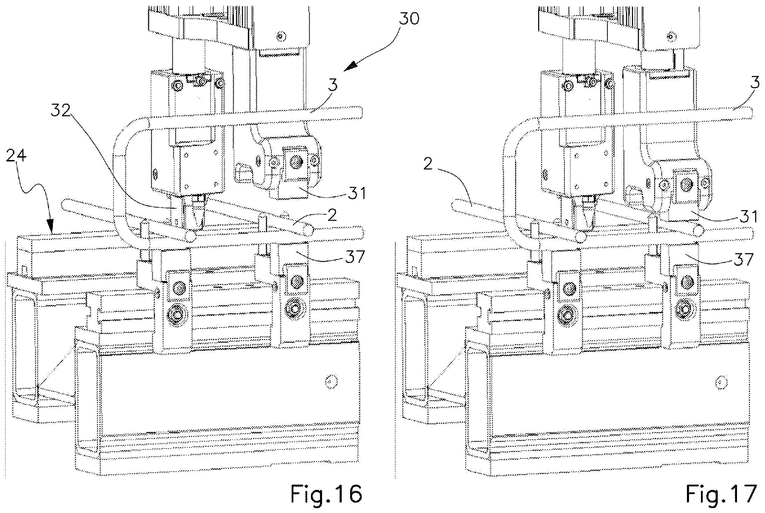

More precisely, the welder members of each welding head 30 provide for a first upper electrode 31 and a second lower electrode 37, suitable to act in contraposition at the junction between the longitudinal bar 2 and the transverse element 3 to be welded, in a way as to carry out also the function of tightening the joint. Each welding head 30 further provides for a contact 32 that can be opened, arranged upstream of the electrodes 31, 37 according to the advancement direction A of the structure in formation, to close the electric circuit of the electrodes 31, 37 in contact with the lower crossbar 24 below (see figure 16). Furthermore the electrodes 31, 37 and the contact 32 are preferably arranged offset one another, in substance on parallel longitudinal planes, in a way as to allow the passage of the longitudinal bars 2. Practically the longitudinal bars 2 are arranged in correspondence of the first electrode 31 of the relative welding head, at the side of the plane engaged by the contact 32.

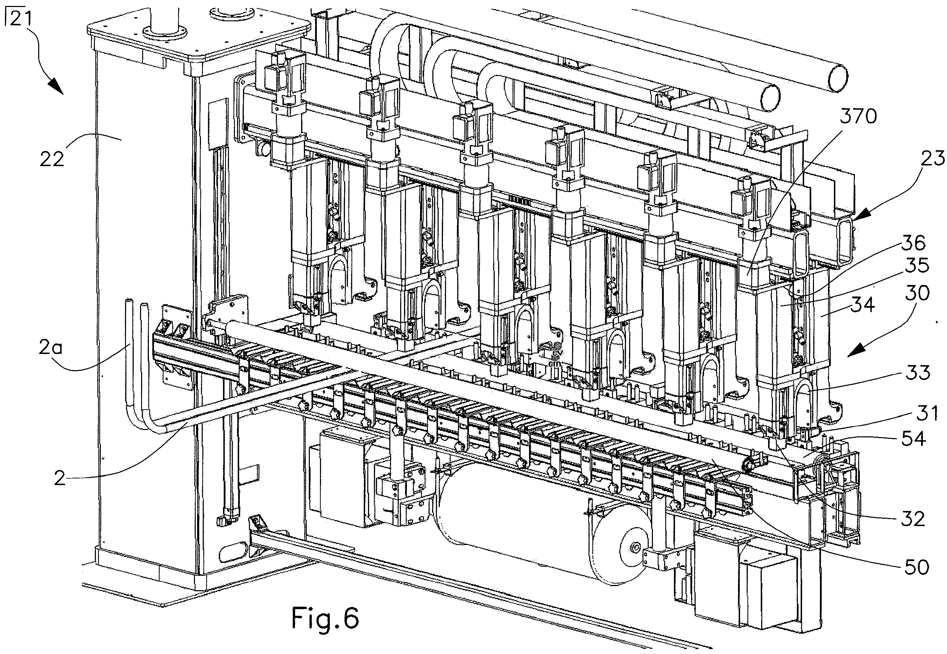

The first electrode 31 and the contact 32 are reciprocally connected through a flexible conductor 33 and are actionable singly, according to a vertical axis, by respective actuator members 34, 35 (see figure 6). The actuator members 34, 35 are carried at the lower part of a plate 36 sliding on guide means 25 along the upper crossbar 23 of the portal structure 21. Alternately the first electrode 31 and the contact 32 could be actuated through one only actuator member, with the interposition of a suitable elastic fastening element, for example a mechanical, pneumatic spring or the like.

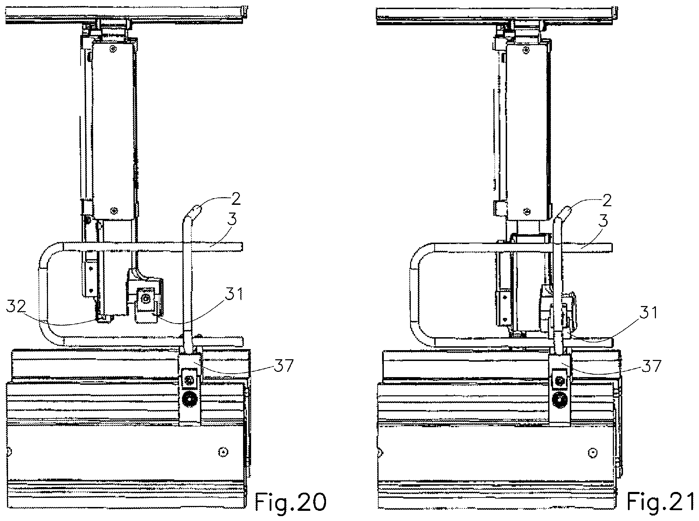

Appropriately the first electrode 31 is either carried overhang forward in the direction of the longitudinal elements 2, to insert profiled transverse elements 3 of any dimension or with a closed profile, or it is carried overhang transversally with respect to the same longitudinal elements 2, to allow the insertion of longitudinal elements 2 profiled with a closed profile (see figures 20 and 21). Alternately it is possible to provide for the electrode to be carried overhang in inclined direction to obtain both previous conditions.

The lower crossbar 24 supports first and second support means 41, 42 for the longitudinal bars 2 fed to the joining station 20 to make the metal structure. With reference to figures 7 and 10, the first support means 41, arranged in correspondence of the inlet zone of the joining station 20, are constituted by a series of raceways 43, constrained in adjustable positions, through respective fastening members 44, to a section bar 45 of the lower crossbar 24. The second support means 42, arranged in correspondence of the welding zone, are constituted by a series of forks 46, constrained in adjustable positions, through respective fastening members 47, to a further section bar 48 of the lower crossbar 24. Obviously in mounting position each raceway 43 of the first support means 41 results longitudinally aligned with a respective fork 46 of the second support means 42, in a way as to allow the passage of a relative longitudinal bar 2.

Above the first support means 41, is suitable to operate a roller 50 for containing the longitudinal bars 2, which extends in a direction transverse to the axis of the same longitudinal bars 2. The containment roller 50 is carried freely rotatable, in correspondence of the opposite ends, by plates 51 which are guided sliding along respective vertical guides 52 constrained to the columns 22 of the portal framework 21. The containment roller 50 is mobile in vertical direction, along the guides 52, upon control of suitable linear actuator members 53. The containment roller 50 allows to keep in position the longitudinal bars 2 inside the raceways 43, during the working, in particular to avoid the upsetting of longitudinal bars having a limited length.

The joining station 20 also provides, substantially in correspondence of the lower crossbar 24, for a lifting roller 54 which extends in a direction transverse to the axis of the longitudinal bars 2 and arranged in use underneath the work plane on which are fed the same longitudinal bars 2, in a median position between the electrodes 31, 37 and the contact 32 of the welding heads 30. The lifting roller 54 is suitable to be shifted in vertical direction in a way as to operate the simultaneous lifting of the longitudinal bars 2. This allows in particular to insert the transverse elements 3 to be welded also under the longitudinal bars 2.

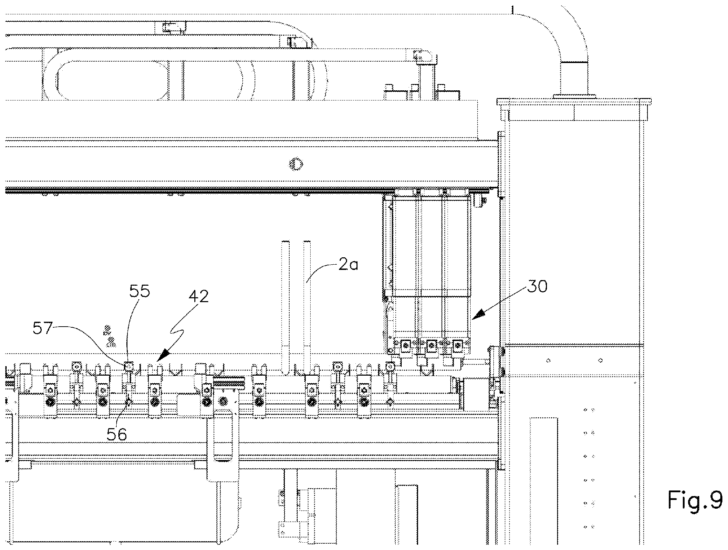

With reference to figure 9, the lower crossbar 24 further carries a plurality of support members 55 for the transverse elements 3 to be welded, in particular the lower branch of the stirrups. Such support members 55 have adjustable position along the lower crossbar 24, through relative supports 56, and are provided with magnetic members 57, for example magnets, to stably retain the transverse elements 3 in the correct position for joining to the longitudinal bars 2.

According to an embodiment of the apparatus, the lower crossbar 24 can be lowered to allow the passage of the folds 2a directed downwards of the longitudinal bars 2. Alternately it is possible to provide for the possibility of raising the upper crossbar 23.

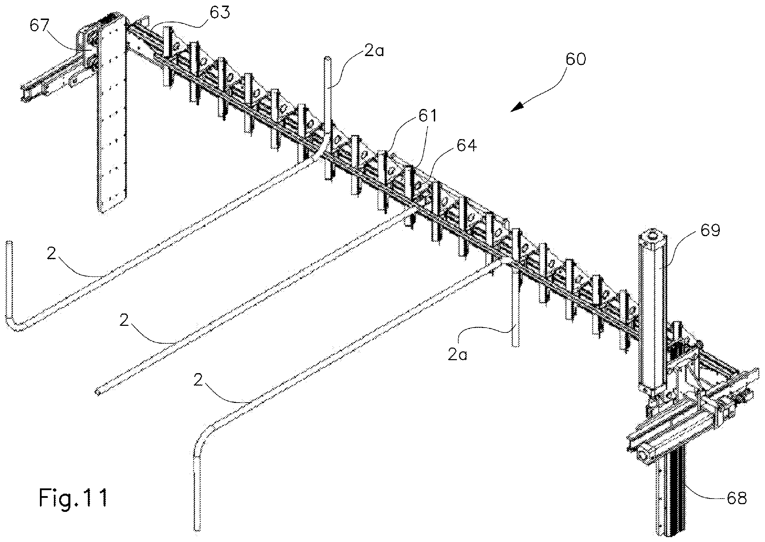

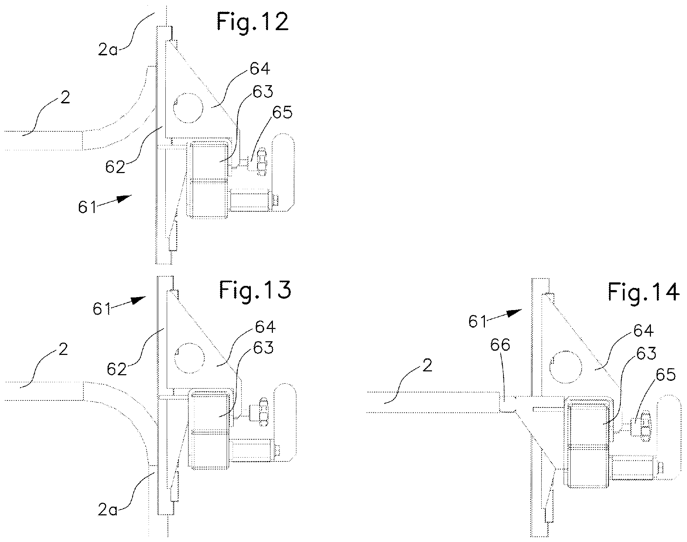

With the joining station 20 is associated a leveller device 60 (see figures 7 and 11) arranged downstream of the welding zone, according to the advancement direction A of the metal structure in formation. The leveller device 60 provides a crossbar 63 made of outlined elements, on which are mounted, in adjustable positions, abutting members 61 which extend vertically above and underneath with respect to the cited work plane on which are fed the longitudinal bars 2, to abut single folds 2a of such bars 2 either in the case that they are oriented upwards or downwards. The abutting members 61 are constituted by listels 62 profiled with a vertical groove directed towards the longitudinal bars 2, carried integral by respective fork-shaped connections 64 suitable to be blocked on the crossbar 63 by means of relative screw members 65 (see figures 12 and 13).

On the crossbar 63 of the leveller device 60 can further be mounted a further abutting member 66 constituted by a listel suitable to tip abut the straight longitudinal bars 2, devoid of folds at the anterior end (fig. 14). The further abutting member 66 is arranged rear with respect to the abutting members 61, according to the advancement direction A of the longitudinal bars 2, to bring the anterior end of the longitudinal bars 2 level with respect to the transverse element 3 to which they are joined, substantially to the welding zone. Nevertheless it is possible to provide for the use of an auxiliary abutment 66a suitable to tip abut the longitudinal bars 2 directed in an advanced position according to the advancement direction A of the bars, in the case that it is required by the structure to be made (fig. 7). In fact it is possible to provide for the mounting on the crossbar 63 of abutting members profiled in the most suitable way as a function of the shape of the folded end of the longitudinal bars 2 to be levelled. It is further possible to provide for the crossbar 63 to be arrangeable also in inclined position with respect to the longitudinal bars 2, for example through rotation with respect to a longitudinal axis.

The crossbar 63 of the leveller device 60 is carried at the opposite ends by a couple of carriages 67 which are mobile on respective vertical guides 68, under control of suitable vertical actuator members 69. This allows to shift the same leveller device 60 in a lowered idle position, at the end of its own operating step, to allow the advancing of the metal structure in formation.

Downstream of the joining station 20, the apparatus finally provides for an outlet station 70 of the metal structure in formation, provided with a haulage device 80. The outlet station 70 provides for a frame 71 extended longitudinally to the apparatus and provided with upper backstays 72 coplanar to the cited work plane of the loading station 10, in a way as to realize the continuity of such a plane on which advances the metal structure in formation.

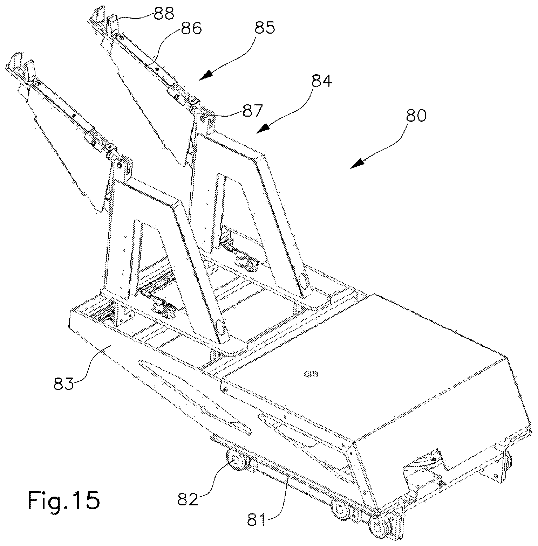

The haulage device 80 provides for a carriage 81 which is mobile, by means of wheels 82 suitably motorised, on a wheel-track 73 which extends longitudinally to the apparatus, on a plane which lies lower to the cited work plane (fig. 15). Obviously it is also possible to provide for the carriage 81 of the haulage device to operate above or in correspondence of the cited work plane. From the carriage 81 extends a frame 83 to which can be fixed, in positions adjustable in direction transverse to the longitudinal axis of the apparatus, single supports 84 of dragging members 85. Such dragging members 85 respectively provide for a tilting arm 86 articulated on a pin 87 in a way as to result rotatable on a longitudinal vertical plane, upon control of suitable actuator means. The tilting arm 86 bears at its free end a pliers element 88 suitable to seize preferably a transverse element 3 of the structure in formation.

In the illustrated case, the haulage device 80 is provided with two dragging members 85, carrying respective pliers members 88, but it is obviously possible to provide for a different number of dragging members 85, according to the dimensions of the structure in formation.

Alternately it is possible to provide for the moving of the structure in formation to be made through a thrust device, preferably of the restarting type. The restart functioning of the haulage or thrust device suitably allows to reduce the lay-out of the apparatus.

The method for making reinforcements for reinforced concrete according to the invention provides for prearranging a series of longitudinal bars 2, suitably distanced between them, upon the work plane defined by the rollers 12 of the support means 11 of the same longitudinal bars 2, in correspondence of the loading station 10. The loading of the longitudinal bars 2 on the support means 11 can be carried out manually or with the aid of suitable automatic loader devices. The longitudinal bars 2 can be arranged in the desired number and at the desired reciprocal distances, according to the specific characteristics of the metal structure to be made; the longitudinal bars 2 can also respectively have different diameter and length, in the case that it is required by the project, upon suitable adjustment of the guide members.

The longitudinal bras 2 are then fed, making them shift upon the aforesaid work plane, to the joining station 20 in correspondence of which are prearranged welding means 30. The longitudinal bars 2 cross the portal framework 21 of the joining station 20, respectively engaging the first and second support means 41, 42, and are brought abutting against the leveller device 60. To such aim, a previous adjustment of the raceways 43 and of the forks 46 of the support means 41, 42 along the respective section bars 45, 48 of the lower crossbar 24 is obviously necessary. The raceways 43 and the forks 46 are blocked in the desired position through the respective fastening members 44, 47.

Similarly, the position of the abutting members 66 and 61 of the leveller device 60 is preventively adjusted, along the crossbar 63. The longitudinal bars 2 are brought abutting against the members 66 and 61 according to the fact that such bars 2 are straight or provided with folds 2a directed upwards or downwards, as schematically illustrated in fig. 11. In particular, in the case that the bars 2 are frontally provided with folds directed upwards or downwards, these are inserted abutting against the vertical groove of the listel 62 of the abutting members 61 (figures 12 and 13); instead, the straight longitudinal bars 2 are brought tip abutting against the abutting member 66 (fig. 14).

It is to note that the abutting members 61 also serve as vertical guide for the folds 2a of the longitudinal bars 2 that, in such a way, are maintained in the correct mounting position.

After the longitudinal bars 2 have been brought abutting against the abutting members 61, 66 of the leveller device 60, the descent of the containment roller 50 upon the same longitudinal bars 2 is operated.

Then, a first transverse element 3, prearranged in the joining station 20, is joined to the longitudinal bars 2 by moving the welding means 30. In the illustrated case, the transverse element 3 is constituted by a polygonal stirrup inserted between the supports 27 of the portal structure 21 and brought into contact with its lower branch upon the longitudinal bars 2. The transverse elements 3 which are used can obviously be differently shaped, in particular being possible also the use of two or more transverse elements on the same vertical plane. Such transverse elements can also be different in diameter, length, pitch, geometric shape of the possible folds, nature of the material and the like.

The welding of the stirrup 3 to the longitudinal bars 2 is performed operating the descent of the electrodes 31 of the welding heads 30, which are prearranged in the suitable work positions along the upper crossbar 23 of the portal structure 21.

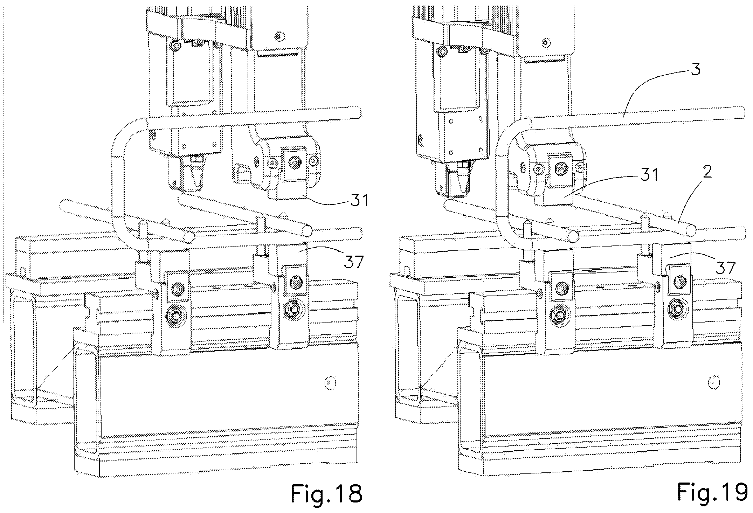

Practically, after each welding head 30 has been positioned in correspondence of the junction to be welded, it is provided to operate the descent of the contact 32 that can be opened on the lower crossbar 24 in a way as to allow the closing of the circuit (fig. 16). Then, it is provided to operate the descent of the first upper electrode 31 which tightens the junction against the second lower electrode 37, performing the welding of the junction (fig. 17). At the end of the welding, it is provided to operate the inverse raising movement of the electrode 31 and of the contact 32 to allow the shifting movement of the structure in formation (fig. 18).

In the case that it is provided to operate through the same welding head 30 the junction of a further joint, at the side of the previous one, it is then provided to shift the same welding head 30 along the upper crossbar 23 until bearing the electrode 31 in correspondence of such further joint (fig. 19). The welding step then proceeds as previously described.

After the welding of the first transverse element 3 has been carried out, the return of the welding heads 30 and of the containment roller 50 in the lifted position is operated, as well as the moving of the leveller device 60 in the idle lowered position, in a way as to allow the advancing of the forming metal structure on the work plane. The advancing is actuated by the haulage device 80 associated with the outlet station 70, according to a predetermined step corresponding to the fastening distance of a successive transverse element 3 to the longitudinal bars 2, as previously described. In an analogous way, for stepwise advancements, fastening of every provided transverse element 3 is carried out on the longitudinal bars 2, until completing the metal structure. The transverse elements 3 can be indifferently fastened above, under the longitudinal bars 2, in the second case due to the intervention of the raising roller 54 that allows the operator to insert the transverse element 3 from the down, between the lower electrodes and the longitudinal elements 2 that result raised with respect to the same lower electrodes. If furthermore the longitudinal bars 2 are provided with folds 2a in the back end directed upwards, lateral shifting of the welding heads 30 is also operated, as can be seen in fig. 9, so that the same welding heads 30 do not interfere with the advancement of the forming metal structure or before the extraction of the item. Instead if the folds are directed downwards, in order to allow the extraction of the item it must be possible to lower the lower crossbar of the joining station.

It is to note that the contact 32 can be opened in order to allow the welding heads 30 to shift transversally from a longitudinal element 2 to another, to join more joints with the same welding head 30, for example in the case that the welding heads 30 are in a lower number than the longitudinal elements, or to shift all the welding heads 30 laterally, in order not to interfere with the possible folds 2a upwards at the end of the longitudinal elements 2, in the extraction step.

The method and the described apparatus attain the scope of easily making reinforcements for reinforced concrete of different type, having either a bidimensional or a tridimensional structure. Practically it is possible to realize netting wire structures of any typology with respect to dimensions, shape and diameters of the longitudinal bars and of the transverse elements, pitch between the elements, presence or not of folds and other analogous parameters.

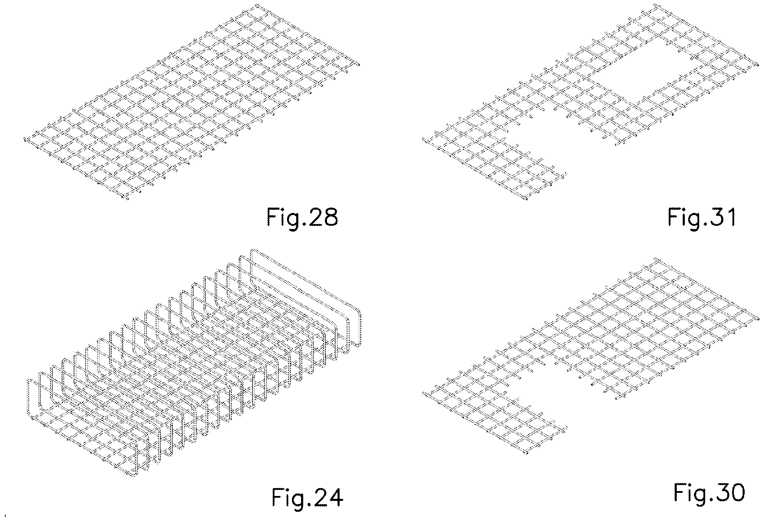

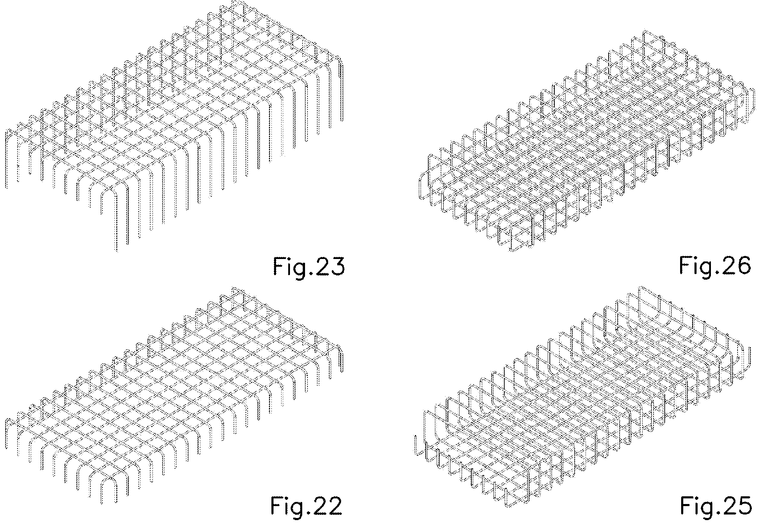

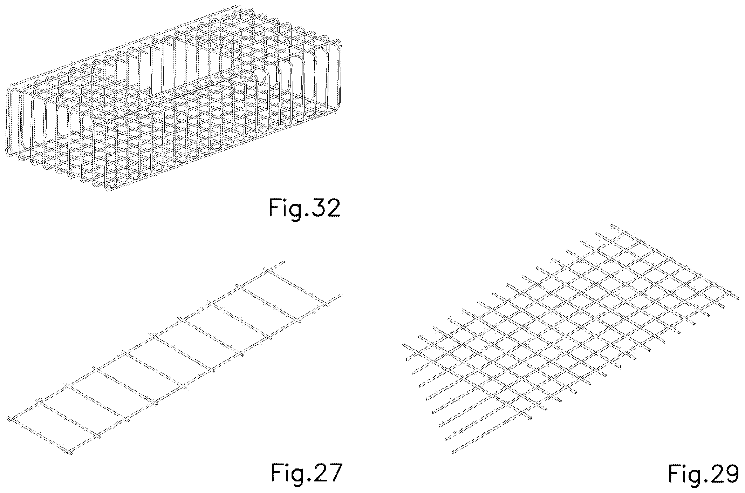

The apparatus which realizes such a method is therefore suitable to satisfy all the various exigencies of the field. Figures 22 - 32 illustrate, for exemplifying purposes, a series of bidimensional and tridimensional metal structures that can be made by means of the claimed apparatus. In particular, figures 22 and 23 illustrate two examples of so-called 'parrillas' nets; figures 24 and 25 illustrate two examples of nets with stirrups; figure 26 illustrates an example of cage; figure 27 illustrates an example of small ladder; figures 28 and 29 illustrate two examples of nets, with longitudinal elements having straight and oblique levelling; figures 30 and 31 illustrate two examples of nets for door and for door and window; figure 32 illustrates an example of plinth or wall. In all the illustrated structures the diameter of the irons can be equal of varying, the pitch between the adjacent elements can be equal or varying, the folds can be short or long and of equal or various length. Furthermore the transverse elements can be arranged above the longitudinal elements, as generally represented, but also under or possibly alternated.

A characteristic of the described apparatus is given by the fact of allowing the realization of tridimensional metal structures starting from longitudinal and/or transverse elements with at least a fold at one or both ends. To such a result contributes specifically the characteristics of the apparatus for which the welding heads can be laterally shifted, in a way as to make the operative zone free for advancing the forming structure.

Another important advantage of the claimed apparatus consists in the fact that it is possible to make wire nettings and other metal bidimensional or tridimensional structures also using longitudinal bras having different diameter, due to the possibility of adjusting and actuating singly in an independent way the welding heads.

In practice, the embodiment of the invention, the materials used, as well as the shape and dimensions, may vary depending on the requirements.

## Claims

1. Method for making reinforcements for reinforced concrete, comprising the steps of :
a. prearranging in a loading station (10) a series of longitudinal elements (2) suitably distanced one another on a work plane defined by support means (11) for supporting said longitudinal elements (2)
b. feeding said longitudinal elements (2), through shifting on said work plane, to a joining station (20) provided with joining means (30) carried overhung from the top in a way as to leave an empty space with respect to said work plane on which are fed said longitudinal elements (2);
c. joining to said longitudinal elements (2) at least a transverse element (3) prearranged in said joining station (20) through actuation of said joining means (30), said joining means (30) comprising a plurality of welding heads (30) each provided with a first upper electrode (31);
d. joining in ordered succession possible further transverse elements (3) to said longitudinal elements (2) to complete the realization of the structure constituted by the joining of said longitudinal elements (2) and said possible further transverse elements (3);
**characterised in that**:
- said empty space left by said joining means (30) above said work plane is suitable to allow the passage of possible folds (2a) shaped on the longitudinal elements (2);
- each first upper electrode (31) is associated to a respective second lower electrode (37) to form respective couples of electrodes (31, 37), suitable to operate in contraposition at the junction between a said longitudinal element (2) and said at least a transverse element (3) to be welded; each said welding heads (30) being further provided with an openable contact (32) connected to a respective first upper electrode (31) to open / close the electric circuit of the respective couple of electrodes (31, 37);
- said plural welding heads (30) are operable to be laterally shifted to allow the passage of possible folds (2a), and further carry said first upper electrodes (31) overhung forward and/or transversally to allow the insertion and welding of longitudinal elements (2) and/or transverse elements (3) shaped according to any profile also with a closed profile.

2. Apparatus for making reinforcements for reinforced concrete, comprising:
- -a loading station (10) provided with support means (11) for supporting a series of longitudinal elements (2) prearranged, suitably distanced one another, on a work plane defined by the same support means (11);
- a joining station (20) provided with joining means (30) carried overhung from the top in a wayas to leave an empty space above said work plane on which are fed said longitudinal elements (2), said joining means (30) comprising a plurality of welding heads (30), each provided with a first upper electrode (31) and being suitable to be actuated to join to said longitudinal elements (2) at least a transverse element (3) prearranged in the same joining station (20);
- an outlet station (70) of the structure constituted by the joining of said longitudinal elements (2) and said at least a transverse element (3), arranged downstream of said joining station (20); **characterised in that**:
- said empty space left by said joining means (30) above said work plane is suitable to allow the passage of possible folds (2a) shaped on the longitudinal elements (2);
- each first upper electrode (31) is associated to a respective second lower electrode (37) to form respective couples of electrodes (31, 37), suitable to operate in contraposition at the junction between a said longitudinal element (2) and said at least a transverse element (3) to be welded; each said welding heads (30) being further provided with an openable contact (32) connected to a respective first upper electrode (31) to open / close the electric circuit of the respective couple of electrodes (31, 37);
- said plural welding heads (30) are operable to be laterally shifted to allow the passage of possible folds (2a), and further carry said first upper electrodes (31) overhung forward and/or transversally to allow the insertion and welding of longitudinal elements (2) and/or transverse elements (3) shaped according to any profile also with a closed profile.

3. Apparatus according to claim 2, **characterized in that** it comprises leveller means (40) associated with said joining station (20) and suitable to be moved between a work position in which they serve as abutment to said longitudinal elements (2) and an idle position to allow the advancement of said structure constituted by the joining of said longitudinal elements (2) and said at least a transverse element (3).

4. Apparatus according to claim 2, **characterized in that** said joining station (20) provides a framework (21) comprising:
- an upper crossbar (23), along which are slidingly supported said joining means (30), mobile on a plane substantially transverse to said work plane and having positions adjustable independently to one another, to allow the passage, in extraction step, of the metal structure in formation, and to allow each said Joining means (30) to operate on more than one longitudinal element (2); and
- a lower crossbar (24) carrying in adjustable positions support means (41, 42) of said longitudinal elements (2).

5. Apparatus according to claim 4, **characterized in that** it provides, downstream of said joining station (20), guide and support means (26, 27) of at least a said transverse element (3) and support members (55) of the same transverse element (3) provided with magnetic members (57) suitable to stably retain said transverse element (3) in the correct position for joining to said longitudinal elements (2).

6. Apparatus according to claim 4, **characterized in that** said support means (41, 42) of the longitudinal elements (2) comprise first support means (41), arranged in correspondence of the inlet zone to said joining station (20) and shaped guide means (43) for said longitudinal members (2), constrained in adjustable positions, through respective fastening members (44), to a section bar (45) of said lower crossbar (24) and second support means (42), arranged in correspondence of the zone of said union station (20) where welding occurs, where said joining means (30) act, and suitable to be arranged longitudinally aligned with said respective first support means (41) to allow the passage of the same longitudinal elements (2).

7. Apparatus according to claim 6, **characterized in that** it comprises a containment roller (50) carried freely rotatable above said first support means (41) and mobile in vertical direction, upon control of suitable actuator means (53), to maintain said longitudinal elements (2) within said guide means (43).

8. Apparatus according to claim 4, **characterized in that** said joining station (20) comprises a lifting roller (54) extended in direction transverse to the axis of said longitudinal elements (2) and arranged in use under said work plane on which are fed the same longitudinal elements (2), said lifting roller (54) being suitable to be shifted in vertical direction in a way as to operate the simultaneous lifting of said longitudinal elements (2) in order to insert thereunder said at least a transverse element (3) to be welded.

9. Apparatus according to claim 3, **characterized in that** said leveller means (40) provide a crossbar (63) on which are mounted, in adjustable positions, a series of abutting members (61) vertically extended above and under with respect to said work plane on which are fed said longitudinal elements (2), to abut single folds (2a) of said longitudinal elements (2) directed upwards or alternately downwards.

10. Apparatus according to claim 9, **characterized in that** said leveller means (40) provide a further abutting member (66) suitable to tip abut said longitudinal elements (2), devoid of folds at the front end, and arranged rear according to the feed direction (A) of the same longitudinal elements (2), to bring said front end of the longitudinal elements (2) level with respect to said at least a transverse element (3) prearranged in said joining station (20).

11. Apparatus according to claim 2, **characterized in that** said first electrode (31) and said openable contact (32) are connected by means of a flexible conductor (33) to close said electric circuit of the electrodes (31, 37) and can be actuated, according to a vertical axis, by actuator means (34, 35) carried overhung at the lower part of support means (36) which can slide on guide means (25) along an upper crossbar (23) of said joining station (20).

12. Apparatus according to claim 11, **characterized in that** said contact (32) is suitable to be closed when abutting an antagonist member (24) prearranged in said joining station (20) and can be open to allow a relative welding head (30) to transversally shift from a said longitudinal element (2) to another.

13. Apparatus according to claim 11, **characterized in that** said first electrode (31) is arranged offset with respect to said openable contact (32), on parallel longitudinal planes, according to the feed direction (A) of said longitudinal elements (2) in a way as to allow the passage of said longitudinal elements (2) possibly folded in correspondence of the same first electrode (31), by the side of the plane engaged by said contact (32) that can be open.

14. Apparatus according to claim 4, **characterized in that** said lower crossbar (24) can be lowered in order to allow the passage of folds (2a) directed downwards of said longitudinal elements (2).

15. Apparatus according to claim 2, **characterized in that** said support means (11) of said longitudinal elements (2) in said loading station (10) can be pulled down to allow the passage of folds (2a) which are located at the ends of the same longitudinal elements (2).

## Patentansprüche

1. Verfahren zur Herstellung von Bewehrungen für Bewehrungsbeton, umfassend die folgenden Schritte:
a. Anordnen in eine Ladestation (10) eine Reihe von Längselementen (2), die auf einer Arbeitsfläche, die durch Trägermittel (11) definiert wird und die Längselemente (2) trägt, geeignet voneinander entfernt sind;
b. Zuführen von Längselementen (2), durch Verschiebung auf die Arbeitsfläche, einer zusammenfügenden Station (20), die mit zusammenfügenden Mittel (30) versehen ist, welche überhängend von oben so getragen werden, dass sie einen Freiraum gegenüber der Arbeitsfläche verlassen, auf der die Längselemente (2) zugeführt werden;
c. Verbinden mindestens eines Querelements (3) mit den Längselementen (2) in der zusammenfügenden Station (20) durch Betätigung der zusammenfügenden Mittel (30), umfassend eine Vielzahl von Schweißköpfen (30), wobei jeder mit einem ersten Oberelektrode (31) versehen ist;
d. Verbinden in geordneter Abfolge von möglichen weiteren Querelementen (3) mit den Längselementen (2), um die Ausführung der Struktur zu vervollständigen, die durch die Verbindung der Längselemente (2) und der möglichen weiteren Querelemente (3) ausgestaltet wird;
**dadurch gekennzeichnet, dass:**
- Der von den zusammenfügenden Mitteln (30) verlassene Freiraum auf der Arbeitsfläche dazu geeignet ist, den Durchgang von möglichen Falten (2a) zu ermöglichen, die auf den Längselementen (2) gebildet sind;
- Jeder ersten Oberelektrode (31) einem jeweiligen zweiten Unterelektrode (37) zugeordnet ist, um jeweilige Elektrodenpaare (31, 37) zu bilden, welche dazu geeignet sind, am Anschluss zwischen dem Längselement (2) und dem zumindest einen zu schweißenden Querelement (3) gegenüberliegend zu wirken; jede der Schweißköpfe (30) ist außerdem mit einem öffnungsfähigen Kontakt (32) versehen, der mit einem jeweiligen ersten Oberelektrode (31) verbunden ist, um den Stromkreis des jeweiligen Elektrodenpaars (31, 37) zu öffnen/schließen;
- Die mehreren Schweißköpfe (30) betätigt werden können, um seitlich verschoben zu werden, um den Durchgang von möglichen Falten (2a) zu ermöglichen und außerdem die ersten Oberelektroden (31) überhängend vorwärts und/oder quer zu tragen, um das Einführen und Schweißen der Längselemente (2) und/oder Querelemente (3) zu ermöglichen, welche gemäß jedes Konturs, auch mit einem geschlossenen Kontur, gebildet sind.

2. Verfahren zur Herstellung von Bewehrungen für Bewehrungsbeton, umfassend:
- Eine Ladestation (10), die mit Trägermitteln (11) zum Tragen einer Reihe von Längselementen (2) versehen ist, welche auf einer durch die gleichen Trägermittel (11) definierte Arbeitsfläche geeignet voneinander entfernt angeordnet sind;
- Eine zusammenfügende Station (20), die mit zusammenfügenden Mitteln (30) versehen ist, die überhängend von oben getragen werden, so dass sie einen Freiraum auf der Arbeitsfläche verlassen, auf der die Längselemente (2) zugeführt werden, wobei die zusammenfügenden Mittel (30) eine Vielzahl von Schweißköpfe (30) umfassen, wobei jeder mit einem ersten Oberelektrode (31) versehen ist und dazu geeignet ist, betrieben zu werden, um mit den Längselementen (2) mindestens ein Querelement (3) zu verbinden, das in derselben zusammenfügenden Station (20) angeordnet ist;
- Eine Ausgabestation (70) der Struktur, die durch die Verbindung der Längselemente (2) und des zumindest einen Querelements (3) ausgestaltet ist, das nach der zusammenfügenden Station (20) angeordnet ist, **dadurch gekennzeichnet, dass**:
- Der von den zusammenfügenden Mitteln (30) verlassene Freiraum auf der Arbeitsfläche dazu geeignet ist, den Durchgang von möglichen Falten (2a) zu ermöglichen, die auf den Längselementen (2) gebildet sind;
- Jeder ersten Oberelektrode (31) einem jeweiligen zweiten Unterelektrode (37) zugeordnet ist, um jeweilige Elektrodenpaare (31, 37) zu bilden, welche dazu geeignet sind, am Anschluss zwischen dem Längselement (2) und dem zumindest einen zu schweißenden Querelement (3) gegenüberliegend zu wirken, jede der Schweißköpfe (30) ist außerdem mit einem öffnungsfähigen Kontakt (32) versehen, der mit einem jeweiligen ersten Oberelektrode (31) verbunden ist, um den Stromkreis des jeweiligen Elektrodenpaars (31, 37) zu öffnen/schließen;
- Die mehreren Schweißköpfe (30) betätigt werden können, um seitlich verschoben zu werden, um den Durchgang von möglichen Falten (2a) zu ermöglichen und außerdem die ersten Oberelektroden überhängend vorwärts und/oder quer zu tragen, um das Einführen und Schweißen der Längselemente (2) und/oder Querelemente (3) zu ermöglichen, welche gemäß jedes Konturs, auch mit einem geschlossenen Kontur, gebildet sind.

3. Einrichtung nach Anspruch 2, **dadurch gekennzeichnet, dass** sie Nivellierungsmittel (40) umfasst, die der zusammenfügenden Station (20) zugeordnet sind und dazu geeignet sind, zwischen einer Arbeitsposition, in der sie als Anschlag zu den Längselementen (2) wirken, und einer Ruheposition bewegt zu werden, um den Vorschub der Struktur zu ermöglichen, die durch die Verbindung der Längselemente (2) und des zumindest einen Querelements (3) ausgebildet ist.

4. Einrichtung nach Anspruch 2, **dadurch gekennzeichnet, dass** die zusammenfügende Station (20) ein Rahmenwerk (21) bereitstellt, umfassend:
- einen Oberquerstab (23), entlang dessen die zusammenfügenden Mittel (30) verschiebbar gehalten sind, die auf einer Ebene, die im Wesentlichen quer zur Arbeitsfläche ist und unabhängig voneinander verstellbare Positionen hat, beweglich ist, um während des Schritts des Herausnehmens den Durchgang der sich bildenden Metallstruktur zu ermöglichen, und um jedem der zusammenfügenden Mittel (30) zu ermöglichen, auf mehr als ein Längselement (2) zu wirken;
und
- einen Unterquerstab (24), der in verstellbaren Positionen Trägermittel (41, 42) der Längselemente (2) trägt.

5. Einrichtung nach Anspruch 4, **dadurch gekennzeichnet, dass** sie nach der zusammenfügende Station (20) Führungs- und Trägermittel (26, 27) von mindestens einem Querelement (3) und Trägerglieder (55) desselben Querelements (3) bereitstellt, die mit magnetischen Gliedern (57) versehen sind, die dazu geeignet sind, das Querelement (3) in der korrekten Position zum Verbinden der Längselemente (2) stabil zu halten.

6. Einrichtung nach Anspruch 4, **dadurch gekennzeichnet, dass** die Trägermittel (41, 42) der Längselemente (2) erste Trägermittel (41) umfassen, die am Einlassbereich zur zusammenfügenden Station (20) und zu den geformten Führungsmitteln (43) für die Längsglieder (2) umfassen, die in verstellbaren Positionen über jeweilige Längsglieder (44) zu einem Schnittstab (45) des Unterquerstabs (24) und einem Trägermittel (42) gehalten werden, das am Bereich der Anschlussstation (20) angeordnet ist, wo das Schweißen stattfindet, wo die zusammenfügenden Mittel (30) wirken, und dazu geeignet sind, mit dem jeweiligen ersten Trägermittel (41) längs ausgerichtet zu werden, um den Durchgang derselben Längselemente (2) zu ermöglichen.

7. Einrichtung nach Anspruch 6, **dadurch gekennzeichnet, dass** sie eine Aufnahmerolle (50) umfasst, die durch die Steuerung von geeigneten Betätigungsmitteln (53) auf dem ersten Trägermittel (41) frei drehend und in vertikalen Richtung beweglich getragen wird, um die Längselemente (2) innerhalb der Führungsmittel (43) beizubehalten.

8. Einrichtung nach Anspruch 4, **dadurch gekennzeichnet, dass** die zusammenfügende Station (20) eine Heberolle (54) umfasst, die sich in Querrichtung zur Achse der Längselemente (2) erstreckt und während der Nutzung unter der Arbeitsebene angeordnet ist, auf der dieselben Längselemente (2) zugeführt werden, wobei die Heberolle (54) dazu geeignet ist, in vertikaler Richtung verschoben zu werden, so dass sie das gleichzeitige Heben der Längselemente (2) bewirkt, um darunter das zumindest eine zu schweißende Querelement (3) einzuführen.

9. Einrichtung nach Anspruch 3, **dadurch gekennzeichnet, dass** die Nivellierungsmittel (40) einen Querstab (63), auf dem sie in verstellbaren Positionen montiert sind, und eine Reihe von Anschlaggliedern (61) bereitstellen, die sich vertikal auf und unter der Arbeitsfläche erstrecken, auf der die Längselemente (2) zugeführt werden, um einzelne Falten (2a) der Längselemente (2) anzuschlagen, die nach oben oder alternativ nach unten ausgerichtet sind.

10. Einrichtung nach Anspruch 9, **dadurch gekennzeichnet, dass** die Nivellierungsmittel (40) ein weiteres Anschlagsglied (66) bereitstellen, das dazu geeignet ist, die Längselemente (2) abzukippen, die frei von Falten am vorderen Ende sind und hinter der Zufürrichtung (A) derselben Längselemente (2) angeordnet sind, um das vordere Ende der Längselemente (2) in Flucht gegenüber dem zumindest einen Querelement (3) zu bringen, das in der zusammenfügende Station (20) angeordnet ist.

11. Einrichtung nach Anspruch 2, **dadurch gekennzeichnet, dass** die erste Elektrode (31) und der öffnungsfähige Kontakt (32) durch einen flexiblen Leiter (33) verbunden sind, um den Stromkreis der Elektroden (31,37) zu schließen, und gemäß einer vertikalen Achse durch Betätigungsmittel (34, 35) betätigt werden können, die überhängend am unteren Teil der Trägermittel (36) getragen werden, die auf Führungsmitteln (25) entlang eines Oberquerstabs (23) der zusammenfügenden Station (20) gleiten können.

12. Einrichtung nach Anspruch 11, **dadurch gekennzeichnet, dass** der Kontakt (32) dazu geeignet ist, während des Anschlags zu einem antagonistischen Glied (24), das in der zusammenfügenden Station (20) angeordnet ist und geöffnet werden kann, geschlossen zu werden, um zu ermöglichen, dass ein relativer Schweißkopf (30) von dem Längselement (2) zu einem anderen quer verschoben wird.

13. Einrichtung nach Anspruch 11, **dadurch gekennzeichnet, dass** die erste Elektrode (31) gemäß der Zuführrichtung (A) der Längselemente (2) versetzt gegenüber dem öffnungsfähigen Kontakt (32) auf parallelen Längsebenen angeordnet ist, um den Durchgang der Längselemente (2) zu ermöglichen, die möglicherweise an derselben ersten Elektrode (31) von der durch den öffnungsfähigen Kontakt (32) eingegriffenen Ebeneseite gefaltet sind.

14. Einrichtung nach Anspruch 4, **dadurch gekennzeichnet, dass** der Unterquerstab (24) gesenkt werden kann, um den Durchgang von Falten (2a) zu ermöglichen, die nach unten gegenüber den Längselementen (2) ausgerichtet sind.

15. Einrichtung nach Anspruch 2, **dadurch gekennzeichnet, dass** die Trägermittel (11) der Längselemente (2) in der Ladestation (10) nach unten gezogen werden können, um den Durchgang der Falten (2a) zu ermöglichen, die an den Enden derselben Längselemente (2) angeordnet sind.

## Revendications

1. Procédé pour réaliser de renforts pour béton armé, comprenant les étapes de:
a. prédisposer dans un poste de chargement (10) une série d'éléments longitudinaux (2) de façon appropriée éloignés l'un de l'autre sur un plan d'usinage défini par des moyens de support (11) qui supportent lesdits éléments longitudinaux (2) ;
b. alimenter lesdits éléments longitudinaux (2), à travers le déplacement sur ledit plan d'usinage, à un poste de jonction (20) pourvu avec des moyens de jonction (30) supportés en surplomb du dessus d'une manière à laisser un espace vide par rapport audit plan d'usinage sur lequel lesdits éléments longitudinaux (2) sont alimentés;
c. assembler auxdits éléments longitudinaux (2) au moins un élément transversal (3) prédisposé dans ledit poste de jonction (20) à travers l'actionnement desdits moyens de jonction (30) comprenant une pluralité de têtes de soudure (30), chacune pourvue avec une première électrode supérieure (31);
d. assembler, dans une succession ordonnée, des autres éléments transversaux (3) possibles auxdits éléments longitudinaux (2) pour compléter la réalisation de la structure constituée par l'assemblage desdits éléments longitudinaux (2) et desdits autres éléments transversaux (3) possibles;
**caractérisé en ce que:**
- ledit espace vide laissé par lesdits moyens de jonction (30) sur ledit plan d'usinage est apte à permettre le passage des plis (2a) possibles formés sur les éléments longitudinaux (2) ;
- chacun premier électrode supérieure (31) est associé à une seconde électrode inférieure (37) respective pour former des couples d'électrodes (31, 37) respectives, aptes à fonctionner de manière opposée dans la jonction entre un élément longitudinal (2) et ledit au moins un élément transversal (3) à souder ; chacune desdites têtes de soudure (30) étant de plus pourvu avec un contact ouvrable (32) relié à une première électrode supérieure (31) respective pour ouvrir/fermer le circuit électrique du couple d'électrodes (31, 37) respectif ;
- lesdites plusieurs têtes de soudure (30) peuvent fonctionner de manière à être déplacées latéralement pour permettre le passage des plis (2a) possibles et supporter de plus lesdites premières électrodes supérieures (31) en surplomb vers l'avant et/ou transversalement pour permettre l'insertion et la soudure des éléments longitudinaux (2) et/ou des éléments transversaux (3) formés selon un profil quelconque, aussi avec un profil fermé.

2. Appareil pour réaliser de renforts pour béton armé, comprenant :
- un poste de chargement (10) pourvu avec moyens de support (11) pour supporter une série d'éléments longitudinaux (2) prédisposés de façon appropriée éloignés l'un de l'autre, sur un plan d'usinage défini par les mêmes moyens de support (11) ;
- un poste de jonction (20) pourvu avec moyens de jonction (30) supportés en surplomb du dessus d'une manière à laisser un espace vide sur ledit plan d'usinage sur lequel sont alimentés lesdits éléments longitudinaux (2), lesdits moyens de jonction (30) comprenant une pluralité de têtes de soudure (30), chacune étant pourvue avec une première électrode supérieure (31) et étant apte à être actionnée pour assembler auxdits éléments longitudinaux (2) au moins un élément transversal (3) prédisposé dans le même poste de jonction (20) ;
- un poste de sortie (70) de la structure constituée par l'assemblage desdits éléments longitudinaux (2) et dudit au moins un élément transversal (3), disposé en aval dudit poste de jonction (20) **caractérisé en ce que** :
- ledit espace vide laissé par lesdits moyens de jonction (30) sur ledit plan d'usinage est apte à permettre le passage des plis (2a) possibles formés sur les éléments longitudinaux (2) ;
- chacun premier électrode supérieure (31) est associé à une seconde électrode inférieure (37) respective pour former des couples d'électrodes (31, 37) respectives, aptes à fonctionner de manière opposée dans la jonction entre un élément longitudinal (2) et ledit au moins un élément transversal (3) à souder, chacune desdites têtes de soudure (30) étant de plus pourvu avec un contact ouvrable (32) relié à une première électrode supérieure (31) respective pour ouvrir/fermer le circuit électrique du couple d'électrodes (31, 37) respectif ;
- lesdites plusieurs têtes de soudure (30) peuvent fonctionner de manière à être déplacées latéralement pour permettre le passage des plis (2a) possibles et supporter de plus lesdites premières électrodes supérieures en surplomb vers l'avant et/ou transversalement pour permettre l'insertion et la soudure des éléments longitudinaux (2) et/ou des éléments transversaux (3) formés selon un profil quelconque, aussi avec un profil fermé.

3. Appareil selon la revendication 2, **caractérisé en ce qu'il** comprend moyens de lissage (40) associés avec ledit poste de jonction (20) et aptes à être déplacés entre une position de travail dans laquelle ils servent comme butée par rapport auxdits éléments longitudinaux (2) et une position inactive pour permettre l'avancement de ladite structure constituée par l'assemblage desdits éléments longitudinaux (2) et dudit au moins un élément transversal (3).

4. Appareil selon la revendication 2, **caractérisé en ce que** ladite station de jonction (20) fournit une structure (21) comprenant :
- une traverse supérieure (23), le long de laquelle sont supportés de façon coulissante lesdits moyens de jonction (30), mobiles sur un plan substantiellement transversal audit plan d'usinage et ayant des positions réglables indépendamment l'un de l'autre, pour permettre le passage, dans l'étape d'extraction, de la structure métallique en formation, et pour permettre que lesdits moyens de jonction (30) fonctionnent sur plus d'un élément longitudinal (2) ;
et
- une traverse inférieure (24) supportant dans des positions réglables des moyens de support (41, 42) desdits éléments longitudinaux (2).

5. Appareil selon la revendication 4, **caractérisé en ce qu'il** fournit, en aval dudit poste de jonction (20), moyens de guide et de support (26, 27) d'au moins un élément transversal (3) et organes de support (55) du même élément transversal (3) pourvu avec des organes magnétiques (57) aptes à retenir stablement ledit élément transversal (3) dans la position correcte pour s'assembler auxdits éléments longitudinaux (2).

6. Appareil selon la revendication 4, **caractérisé en ce que** lesdits moyens de support (41, 42) des éléments longitudinaux (2) comprennent des premiers moyens de support (41), disposés dans la zone d'entrée par rapport audit poste de jonction (20) et moyens de guide (43) formés pour lesdits longitudinal organes (2), solidaires dans des positions réglables à travers organes de fixation (44) respectifs, par rapport à un profilé (45) de ladite traverse inférieure (24) et des seconds moyens de support (42), disposés dans la zone dudit poste de raccord (20) où a lieu la soudure, où lesdits moyens de jonction (30) fonctionnent, et aptes à être disposés de façon alignée longitudinalement avec lesdits premiers moyens de support (41) respectifs pour permettre le passage des mêmes éléments longitudinaux (2).

7. Appareil selon la revendication 6, **caractérisé en ce qu'il** comprend un rouleau de contenance (50) supporté de manière librement pivotante sur lesdits premiers moyens de support (41) et mobile dans la direction verticale, à travers le contrôle des moyens actionneurs (53) appropriés, pour maintenir lesdits éléments longitudinaux (2) à l'intérieur desdits moyens de guide (43).

8. Appareil selon la revendication 4, **caractérisé en ce que** ledit poste de jonction (20) comprend un rouleau de levage (54) se prolongeant dans direction transverse par rapport à l'axe desdits éléments longitudinaux (2) et disposé lors de l'utilisation sous ledit plan d'usinage sur lequel sont alimentés les mêmes éléments longitudinaux (2), ledit rouleau de levage (54) étant apte à être déplacé dans une direction verticale d'une manière à actionner le levage simultané desdits éléments longitudinaux (2) pour insérer ci-dessous au moins un élément transversal (3) à souder.

9. Appareil selon la revendication 3, **caractérisé en ce que** lesdits moyens de lissage (40) fournissent une traverse (63) sur laquelle est montée, dans des positions réglables, une série d'organes de butée (61) se prolongeant verticalement vers le haut et vers le bas par rapport audit plan d'usinage sur lequel sont alimentés lesdits éléments longitudinaux (2), pour se mettre en butée contre single plis (2a) desdits éléments longitudinaux (2) dirigés vers le haut ou alternativement vers le bas.

10. Appareil selon la revendication 9, **caractérisé en ce que** lesdits moyens de lissage (40) fournissent un autre organe de butée (66) apte à se mettre en butée contre lesdits éléments longitudinaux (2), dépourvus de plis en correspondance de l'extrémité antérieure, et disposés postérieurement selon la direction d'alimentation (A) des mêmes éléments longitudinaux (2), pour porter à niveau ladite extrémité antérieure des éléments longitudinaux (2) par rapport audit au moins un élément transversal (3) prédisposé dans ledit poste de jonction (20).

11. Appareil selon la revendication 2, **caractérisé en ce que** ladite première électrode (31) et ledit contact ouvrable (32) sont reliés à travers un conducteur flexible (33) pour fermer ledit circuit électrique des électrodes (31,37) et peuvent être actionnés, selon un axe vertical, à travers les actionneurs (34, 35) supportés en surplomb dans la partie inférieure des moyens de support (36) qui peuvent coulisser sur les moyens de guide (25) le long d'une traverse supérieure (23) dudit poste de jonction (20).

12. Appareil selon la revendication 11, **caractérisé en ce que** ledit contact (32) est apte à être fermé pendant la butée contre un organe antagoniste (24) prédisposé dans ledit poste de jonction (20) et peut être ouvert pour permettre à une tête de soudure (30) relative de se déplacer transversalement dudit élément longitudinal (2) à l'autre.

13. Appareil selon la revendication 11, **caractérisé en ce que** ladite première électrode (31) est disposée décalée par rapport audit contact ouvrable (32) sur des plans longitudinaux parallèles, selon la direction d'alimentation (A) desdits éléments longitudinaux (2) d'une manière à permettre le passage desdits éléments longitudinaux (2), si possible repliés, en correspondance de la même première électrode (31), du côté du plan mis en prise par ledit contact (32) qui peut être ouvert.

14. Appareil selon la revendication 4, **caractérisé en ce que** ladite traverse inférieure (24) peut être baissée pour permettre le passage des plis (2a) dirigés vers le bas desdits éléments longitudinaux (2).

15. Appareil selon la revendication 2, **caractérisé en ce que** lesdits moyens de support (11) desdits éléments longitudinaux (2) dans ledit poste de chargement (10) peuvent être tirés vers le bas pour permettre le passage des plis (2a) qui sont disposés en correspondance des extrémités des mêmes éléments longitudinaux (2).
